(19) Europäisches Patentamt
European Patent Office
Office européen des brevets

(11) **EP 1 233 506 B1**

(12) **FASCICULE DE BREVET EUROPEEN**

(45) Date de publication et mention
de la délivrance du brevet:
**18.09.2013 Bulletin 2013/38**

(51) Int Cl.:
**H02P 21/06** *(2006.01)*

(21) Numéro de dépôt: **02290143.3**

(22) Date de dépôt: **21.01.2002**

(54) **Procédé et dispositif de commande de régulation d'une machine électrique tournante à courant alternatif, en particulier synchrone**

Regelverfahren und Vorrichtung für eine rotierende elektrische Wechselstrommaschine, insbesondere Synchronmaschine

Control method and device for a rotating electric ac machine, especially synchronous machine

(84) Etats contractants désignés:
**AT BE CH CY DE DK ES FI FR GB GR IE IT LI LU MC NL PT SE TR**

(30) Priorité: **14.02.2001 FR 0102012**

(43) Date de publication de la demande:
**21.08.2002 Bulletin 2002/34**

(73) Titulaire: **ALSTOM Transport SA**
**92300 Levallois-Perret (FR)**

(72) Inventeurs:
• **Thomas, Jean-Luc**
**77810 Thomery (FR)**
• **Alacoque, Jean-Claude**
**69360 Communay (FR)**
• **Poullain, Serge**
**91290 Arpajon (FR)**
• **Benchaib, Abdelkrim**
**78180 Montigny le Bretonneux (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**EP-A- 1 037 378    EP-A- 1 045 514**
**WO-A-99/29031**

• **PATENT ABSTRACTS OF JAPAN vol. 005, no. 007 (E-041), 17 janvier 1981 (1981-01-17) & JP 55 136890 A (FUJI ELECTRIC CO LTD), 25 octobre 1980 (1980-10-25)**

**Description**

La présente invention concerne un procédé de régulation d'une machine électrique tournante à courant alternatif, en particulier un moteur électrique du type synchrone à pôles lisses. Elle se rapporte également à un dispositif d'alimentation d'une telle machine.

Elle s'applique notamment, mais non exclusivement aux moteurs utilisés dans le domaine ferroviaire pour la traction et la suspension active.

Plus précisément, l'invention concerne un procédé de régulation capable d'asservir le couple électromagnétique de la machine sur des valeurs de consigne.

En effet, la commande de la vitesse d'une machine synchrone est généralement effectuée en régulant le couple électromagnétique de la machine. Pour ce faire, les machines tournantes sont généralement dotées d'un régulateur recevant en entrée, une valeur de consigne de couple électromagnétique et un ou plusieurs signaux échantillonnés représentatifs du couple électromagnétique de la machine élaborés à partir d'une mesure du courant statorique, le régulateur appliquant une tension de commande à un onduleur d'alimentation de la machine. Pour asservir le couple électromagnétique de la machine sur la valeur de consigne de couple, le régulateur procède, à chaque instant d'échantillonnage, à une prédiction de la valeur du couple à l'instant d'échantillonnage suivant, et modifie en conséquence la tension de commande de l'onduleur.

L'une des principales préoccupations pour la plupart des applications industrielles est l'amélioration des performances dynamiques de telles machines, et en particulier l'augmentation de la dynamique de couple.

Une première solution consiste à augmenter les capacités de commutation des commutateurs de puissance dont est muni l'onduleur pour augmenter la fréquence de commutation. Toutefois, cette solution implique l'usage de composants de puissance très coûteux et conduit à augmenter les pertes de commutation.

On peut doter le système de composants électroniques à faible perte. Une telle solution est cependant inacceptable dans la mesure où elle contribue à augmenter considérablement le coût du dispositif d'alimentation de la machine.

Pour définir le fonctionnement du régulateur, il existe par ailleurs, des méthodes consistant à utiliser un modèle continu dans le temps pour modéliser le fonctionnement de la machine, à effectuer à partir de ce modèle continu ce que l'on appelle une synthèse pour déterminer toujours en temps continu les équations donnant les commandes correctives à appliquer au système en fonction de paramètres de fonctionnement, pour obtenir le fonctionnement souhaité, puis à discrétiser dans le temps ces équations pour obtenir des équations aux différences qui sont exécutables par un calculateur numérique intégré dans le régulateur.

Toutefois, ces méthodes offrent des performances limitées en terme de dynamique de commande et des phénomènes d'instabilité peuvent apparaître si la période d'échantillonnage qui est imposée par l'onduleur est trop élevée. En outre ces méthodes ne permettent pas d'atteindre une valeur de consigne de couple en une seule période d'échantillonnage.

Par la demande de brevet EP 1 045 514 déposée par la demanderesse, on connaît un procédé pour commander une machine électrique tournante à partir d'un modèle discret de la machine et de l'onduleur d'alimentation de la machine, ce modèle donnant la tension de commande à appliquer par l'onduleur à la machine pour atteindre une valeur de couple de consigne et une valeur de module de flux magnétique de consigne. Toutefois, ce modèle est adapté aux machines tournantes de type asynchrone, et ne s'applique pas à n'importe quel type de machine tournante. En outre, la régulation du couple et du module de flux ne permet pas de prendre en considération l'ensemble des paramètres de fonctionnement de la machine. Il en résulte que les performances dynamiques de la machine peuvent encore être améliorées.

L'invention a pour but de palier les inconvénients précités. Cet objectif est atteint par un procédé selon la revendication 1 et un dispositif selon la revendication 11.

Avantageusement, la valeur de consigne d'énergie est une valeur minimum.

Selon une autre particularité de l'invention, la loi de commande discrète est déterminée dans un repère $(\widetilde{d}, \widetilde{q})$ lié à l'évolution libre en temps discret du flux rotorique dans la machine.

Lorsque la machine est de type synchrone à pôles lisses, la loi de commande discrète déterminée au cours de l'étape préalable est de la forme suivante :

$$\begin{bmatrix} v_{\widetilde{d}} \\ v_{\widetilde{q}} \end{bmatrix}_{k-1} = \frac{1}{a\left\|\vec{\Phi}_k^0\right\|}\begin{bmatrix} \Delta W \\ \Delta \Gamma \end{bmatrix}_k$$

dans laquelle $V_{\widetilde{d},k-1}$ et $V_{\widetilde{q},k-1}$ représentent les composantes du vecteur de tension de commande à l'instant k-1, exprimées dans un repère $(\widetilde{d}, \widetilde{q})$ mobile en temps discret et lié à l'évolution libre $\vec{\Phi}_k^0$ du flux rotorique dans la machine à l'instant suivant k, $\left\|\vec{\Phi}_k^0\right\|$ correspond au module de l'évolution libre du flux rotorique à l'instant suivant k, $\Delta\Gamma_k$ et $\Delta W_k$ représentant respectivement l'écart entre le couple électromagnétique de la machine à atteindre à l'instant d'échantillonnage k suivant et la composante d'évolution libre de ce couple à cet instant, et l'écart entre l'énergie magnétique consommée par la machine à l'instant k et la composante d'évolution libre de cette énergie à cet instant.

Avantageusement, la machine est de type synchrone à aimants permanents montés en surface.

Alternativement, la machine est de type synchrone à pôles lisses bobinés.

Selon une particularité de l'invention, ce procédé comprend la mise en oeuvre d'une stratégie à basse vitesse lorsque la machine tourne à une vitesse inférieure à un seuil prédéfini, cette stratégie consistant à déterminer la tension de commande à appliquer à la machine pour atteindre à l'instant d'échantillonnage suivant le couple de consigne avec un apport d'énergie magnétique nul.

De préférence, cette stratégie à basse vitesse consiste à appliquer la loi de commande discrète suivante :

$$\begin{bmatrix} v_{\widetilde{d}} \\ v_{\widetilde{q}} \end{bmatrix}_{k-1} = \begin{bmatrix} \dfrac{-I_{k,\widetilde{d}}^0}{a} \\ \dfrac{\Delta\Gamma_k}{a\left\|\vec{\Phi}_k^0\right\|} \end{bmatrix}$$

dans lequel $I_{k,\widetilde{d}}^0$ est la composante de l'évolution libre du courant statorique, suivant l'axe $\widetilde{d}$ du repère $(\widetilde{d}, \widetilde{q})$ lié à l'évolution libre du courant statorique durant la période d'échantillonnage entre les instants d'échantillonnages k-1 et k.

Selon une autre particularité de l'invention, ce procédé comprend la mise en oeuvre d'une stratégie à haute vitesse lorsque la machine tourne à une vitesse supérieure à un seuil prédéfini, cette stratégie consistant à tenir compte des limitations de l'onduleur, pour déterminer une valeur de couple de consigne intermédiaire que la machine peut atteindre à l'instant d'échantillonnage suivant, avec une énergie magnétique consommée donnée.

De préférence, cette stratégie à haute vitesse comprend la résolution du système d'équations suivant :

$$\left(I_{k,\widetilde{d}} - I_{k,\widetilde{d}}^0\right)^2 + \left(I_{k,\widetilde{q}} - I_{k,\widetilde{q}}^0\right)^2 = \left(a\left\|\vec{V}_{smax}\right\|\right)^2$$

$$I_{k,\widetilde{d}}^2 + I_{k,\widetilde{q}}^2 = \left\|\vec{I}_{smax}\right\|^2$$

dans lequel $I_{k,\widetilde{d}}$ et $I_{k,\widetilde{q}}$ sont les composantes du courant statorique dans le repère $(\widetilde{d}, \widetilde{q})$ à l'instant k, $I_{k,\widetilde{d}}^0$ et $I_{k,\widetilde{q}}^0$ sont les composantes de l'évolution libre du courant statorique dans ce repère au même instant, $\left\|\vec{V}_{smax}\right\|$ et $\left\|\vec{I}_{smax}\right\|$ sont respectivement les modules de la tension maximum et du courant maximum dans le stator, et a une constante, la tension de commande étant obtenue à l'aide de l'équation suivante :

$$\begin{bmatrix} v_{\tilde{d}} \\ v_{\tilde{q}} \end{bmatrix}_{k-1} = \begin{bmatrix} \dfrac{I_{k,\tilde{d}} - I_{k,\tilde{d}}^0}{a} \\ \dfrac{I_{k,\tilde{q}} - I_{k,\tilde{q}}^0}{a} \end{bmatrix}.$$

L'invention concerne également un dispositif de régulation d'une machine tournante, comprenant un onduleur alimenté par une tension d'alimentation, un régulateur recevant en entrée une valeur de consigne de couple électromagnétique et au moins un signal échantillonné représentatif du couple électromagnétique de la machine et délivrant à l'onduleur une tension de commande adaptée pour asservir le couple électromagnétique de la machine sur la valeur de consigne de couple, par prédiction, à chaque instant d'échantillonnage, de la valeur de couple électromagnétique à l'instant d'échantillonnage suivant et modification consécutive de la tension de commande, caractérisé en ce que le régulateur comprend :

- une loi de commande discrète de la machine, stockée en mémoire, cette loi de commande donnant la tension de commande discrète à appliquer à un instant d'échantillonnage courant k, sous la forme d'un premier terme correspondant à l'évolution libre de l'état de la machine en l'absence de commande, entre l'instant d'échantillonnage précédent k-1 et l'instant d'échantillonnage courant k, et d'un second terme dépendant de valeur du couple de consigne et d'une valeur de consigne d'énergie magnétique consommée par la machine, et

- des moyens pour déterminer à chaque instant d'échantillonnage, à l'aide de la loi de commande discrète, la tension de commande à appliquer à la machine pour que le couple électromagnétique de la machine atteigne le couple de consigne, et l'énergie magnétique consommée par la machine corresponde à la valeur de consigne d'énergie.

Un mode de réalisation préféré de l'invention sera décrit ci-après, à titre d'exemple non limitatif, avec référence aux dessins annexés dans lesquels

La figure 1 représente schématiquement un synoptique d'un dispositif d'alimentation d'une machine tournante conforme à l'invention ;

La figure 2 représente les repères tournant utilisés conformément à l'invention dans la modélisation du fonctionnement de la machine tournante ;

La figure 3 illustre une stratégie de commande de la machine à basse vitesse, selon l'invention ;

La figure 4 montre une courbe en fonction du temps de l'évolution du couple électromagnétique de la machine ;

La figure 5 montre une vue agrandie d'une partie de la courbe représentée sur la figure 5 lorsque la machine fonctionne à basse vitesse ;

Les figures 6 et 7 illustrent une stratégie de commande de la machine à haute vitesse, selon l'invention ;

La figure 8 montre une vue agrandie d'une partie de la courbe représentée sur la figure 5 lorsque la machine fonctionne à haute vitesse.

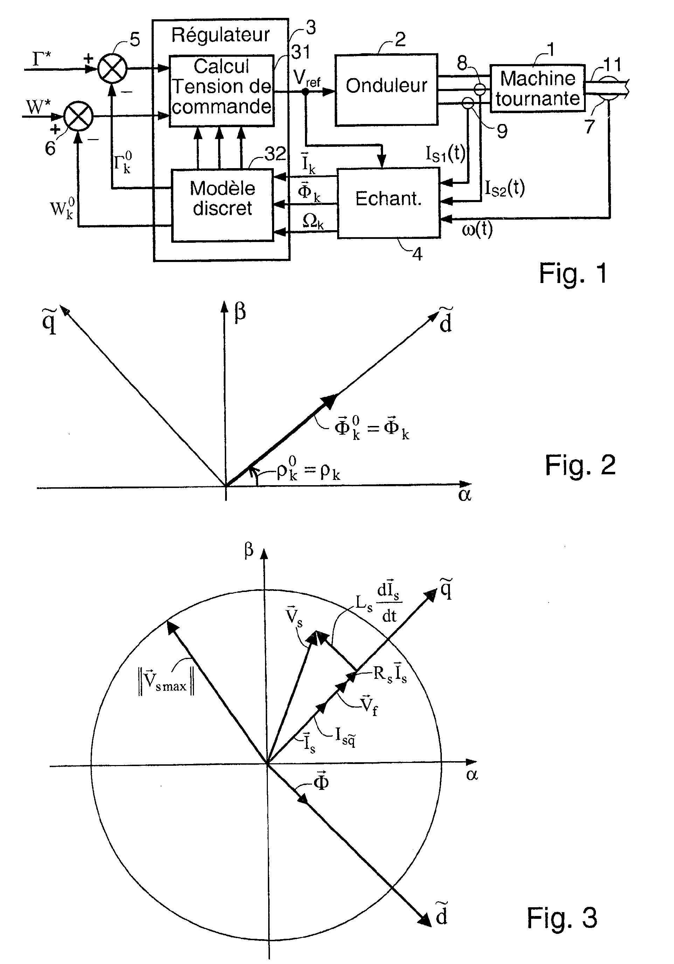

Sur la figure 1, on a représenté une machine tournante 1 constituée par un moteur électrique synchrone triphasé, par exemple, utilisé pour la traction d'une machine ferroviaire électrique, d'un robot ou d'une machine outil. La machine tournante 1 est alimentée par un dispositif d'alimentation 2 qui comporte, comme cela est classique, un onduleur de tension alimentant le moteur 1 en tension alternative triphasée, lequel onduleur est raccordé à une source d'alimentation en tension continue, par exemple une tension de l'ordre de 1500 à 3000 Volts, pour une application dans le domaine ferroviaire.

L'onduleur 2 est piloté par un dispositif de régulation 3 conçu pour délivrer une tension $V_{ref}$ de commande, qui détermine la tension à appliquer par l'onduleur 2 à la machine 1, cette tension étant élaborée par le dispositif de régulation 3, de manière à asservir le couple électromagnétique de la machine 1, sur une valeur de consigne de couple électromagnétique $\Gamma^*$.

Comme on le voit sur la figure 1, le régulateur 3 reçoit également, en entrée, un ou plusieurs signaux échantillonnés, de préférence les signaux $\vec{I}_k$, $\vec{\Phi}_k$, $\Omega_k$, correspondant respectivement aux valeurs discrètes du vecteur de courant statorique, du vecteur de flux magnétique et de la vitesse de rotation du rotor de la machine 1, ces signaux, représentatifs du couple électromagnétique de la machine, étant élaborés par un observateur échantillonneur 4 à partir de signaux continus $I_{S1}(t)$, $I_{S2}(t)$ et $\omega(t)$, mesurés en entrée et en sortie du moteur et correspondant respectivement à deux phases du courant statorique et à un signal de mesure de la vitesse mécanique de rotation du rotor, délivrés par des capteurs appropriés équipant la machine 1. Les deux phases mesurées du courant statorique permettent de déduire la valeur de la troisième phase, en supposant que la machine est équilibrée. Les valeurs de ces trois phases permettent ensuite de déterminer les composantes $(I_\alpha, I_\beta)$ d'un vecteur de courant statorique, exprimées dans un repère à deux dimensions, lié au stator de la machine 1.

Comme cela est classique, pour asservir le couple électromagnétique de la machine 1 sur les valeurs de consigne de couple $\Gamma^*$ reçues en entrée, le régulateur 3 procède, à l'aide de moyens logiciels stockés en mémoire, à chaque instant d'échantillonnage, à une prédiction des valeurs de couple électromagnétique à l'instant d'échantillonnage suivant, et modifie en conséquence la tension de commande $V_{ref}$ à synthétiser par l'onduleur 2 et qui est appliquée à la machine, de manière à obtenir les valeurs de couple imposées par les consignes.

On notera que, de préférence, le régulateur 3 est un régulateur de type "à réponse pile", c'est à dire qu'il modifie la tension de commande $V_{ref}$, de manière à atteindre les valeurs de consigne lors de l'instant d'échantillonnage suivant.

Pour ce faire, le régulateur 3 comporte un premier étage 32 dans lequel est stocké, en mémoire, un modèle discret de la machine tournante 1, permettant de calculer l'évolution de l'état de la machine entre deux instants d'échantillonnage, et un deuxième étage 31 de calcul de la tension de commande $V_{ref}$, en fonction de l'évolution prédite de l'état de la machine par le premier étage, et du signal de consigne $\Gamma^*$ présenté en entrée du deuxième étage 31.

Dans la suite de la description, on va tout d'abord décrire la méthode de calcul du modèle discret de la machine tournante 1, puis l'on va décrire la méthode de calcul de la tension de commande $V_{ref}$.

Comme mentionné précédemment, le comportement dynamique de la machine tournante 1 est modélisé par un système algébro-différentiel défini en temps continu.

La machine peut être modélisée par les équations d'état suivantes :

$$\dot{\vec{X}} = A(\Omega)\vec{X} + B\vec{V}_s \qquad (1)$$

$$\vec{Y} = h(\vec{X}) \qquad (2)$$

dans lesquelles :

$\vec{X}$ est un vecteur d'état modélisant le fonctionnement de la machine 1, et $\dot{\vec{X}} = \dfrac{d\vec{X}}{dt}$,

$\vec{V}_s$ représente le vecteur de la tension appliquée en entrée de la machine, qui est égal à la tension du stator de la machine,

$A(\Omega)$ est une matrice d'état dépendant de la vitesse mécanique $\Omega$,

B est une matrice d'entrée du vecteur de tension,

$\vec{Y}$ est un vecteur de sortie incluant la valeur du couple électromagnétique $\Gamma$, et

h est une fonction non-linéaire.

Dans la formule précédente, on suppose connue la relation entre la tension de commande $V_{ref}$ et la tension du stator $\vec{V}_s$, cette relation dépendant uniquement des caractéristiques de l'onduleur.

Dans le cas d'un moteur synchrone, le vecteur d'état $\vec{X}$ peut être défini par les composantes du courant statorique et par les composantes du flux rotorique comme suit :

$$\vec{X} = \begin{bmatrix} \vec{I}_s \\ \vec{\Phi} \end{bmatrix} = \begin{bmatrix} I_{s\alpha} \\ I_{s\beta} \\ \Phi_\alpha \\ \Phi_\beta \end{bmatrix} \qquad (3)$$

dans lequel les composantes du courant statorique et du flux rotorique sont par exemple exprimées dans un repère ($\alpha$, $\beta$) lié au stator de la machine 1.

Selon l'invention, le vecteur de sortie $\vec{Y}$ défini par la relation (2), a pour composantes le couple électromagnétique du moteur et l'énergie magnétique. Il s'écrit de la manière suivante :

$$\vec{Y} = \begin{bmatrix} y_1 \\ y_2 \end{bmatrix} = \begin{bmatrix} W \\ \Gamma \end{bmatrix} = \begin{bmatrix} \vec{\Phi} \cdot \vec{I}_s \\ n_p \vec{\Phi} \times \vec{I}_s \end{bmatrix} \qquad (4)$$

où l'opérateur "$\times$" représente le produit vectoriel et l'opérateur "$\cdot$" représente le produit scalaire.

On notera dans ce qui précède que la tension du stator $\vec{V}_s$ peut être considérée comme une constante entre deux périodes d'échantillonnage successives.

L'équation d'état (1) peut être discrétisée de la manière suivante :

$$\vec{X}_k = F(\Omega_{k-1})\, \vec{X}_{k-1} + G(\Omega_{k-1})\, \vec{V}_{s,k-1} \qquad (5)$$

avec $F(\Omega) = e^{A(\Omega)\delta}$ et $G(\Omega) = A^{-1}(\Omega)\,[e^{A(\Omega)\delta} - 1]\,B$,

$\vec{X}_k$, $\vec{V}_{s,k}$ et $\Omega_k$ représentant respectivement les valeurs discrètes du vecteur d'état $\vec{X}$ de la tension statorique $\vec{V}_s$ et de la vitesse mécanique du moteur aux instants d'échantillonnage k, et $\delta$ étant la période d'échantillonnage. On supposera dans ce qui suit que la vitesse mécanique $\Omega_k$ du moteur est constante durant chaque période d'échantillonnage.

Les matrices F et G peuvent être représentées de la manière suivante :

$$F = \begin{bmatrix} F_1 & F_2 \\ F_3 & F_4 \end{bmatrix} \text{ et } G = \begin{bmatrix} G_1 \\ G_2 \end{bmatrix} \qquad (6)$$

L'équation (5) s'écrit donc de la manière suivante :

$$\vec{X}_k = \begin{bmatrix} \vec{I} \\ \vec{\Phi} \end{bmatrix}_k = \begin{bmatrix} F_1 & F_2 \\ F_3 & F_4 \end{bmatrix}\begin{bmatrix} \vec{I} \\ \vec{\Phi} \end{bmatrix}_{k-1} + \begin{bmatrix} G_1 \\ G_2 \end{bmatrix}\begin{bmatrix} v_\alpha \\ v_\beta \end{bmatrix}_{k-1} \qquad (7)$$

Le vecteur d'état $\vec{X}_k$ peut donc se décomposer en une partie à évolution libre, c'est-à-dire en l'absence de toute commande de tension, et une partie due à la commande de tension $\vec{V}_{s,k}$ appliquée à la machine :

$$\vec{X}_k = \vec{X}_k^0 + G\vec{V}_{s,k-1} \qquad\qquad (8)$$

ou bien :

$$\begin{bmatrix} \vec{I} \\ \vec{\Phi} \end{bmatrix}_k = \begin{bmatrix} \vec{I}^0 \\ \vec{\Phi}^0 \end{bmatrix}_k + G \begin{bmatrix} v_\alpha \\ v_\beta \end{bmatrix}_{k-1} \qquad\qquad (9)$$

Par conséquent, les évolutions libres du courant statorique et du flux rotorique, $\vec{I}_k^0$ et $\vec{\Phi}_k^0$ s'écrivent de la manière suivante :

$$\vec{I}_k^0 = \begin{bmatrix} F_1 & F_2 \end{bmatrix} \begin{bmatrix} \vec{I} \\ \vec{\Phi} \end{bmatrix}_{k-1} \quad \text{et}$$

$$\vec{\Phi}_k^0 = \begin{bmatrix} F_3 & F_4 \end{bmatrix} \begin{bmatrix} \vec{I} \\ \vec{\Phi} \end{bmatrix}_{k-1} \qquad\qquad (10)$$

Le procédé selon l'invention consiste ensuite, à l'aide des équations introduites ci-avant, à déterminer une fonction f donnant la tension de commande $V_{ref}$ ou la tension du stator à appliquer à chaque instant d'échantillonnage k en fonction des variables $\Delta\Gamma_k$ et $\Delta W_k$ représentant respectivement l'écart entre le couple électromagnétique de la machine à atteindre à l'instant d'échantillonnage k et la composante d'évolution libre de ce couple à cet instant, et l'écart entre l'énergie magnétique de la machine à l'instant k et la composante d'évolution libre de cette énergie à cet instant. Une telle fonction peut être exprimée de la manière suivante :

$$\vec{V}_{s,k-1} = \vec{f}(\Delta\Gamma_k, \Delta W_k) \qquad\qquad (11)$$

Dans le cas d'un moteur de type synchrone à pôles lisses, par exemple à aimants permanents montés à la surface du rotor ou dont les pôles sont réalisés par un bobinage à la surface du rotor, les matrices A(Ω), B et le vecteur $\vec{V}_s$ ont les formes suivantes dans le repère (α, β) :

$$A(\Omega) = \begin{bmatrix} -\dfrac{R_s}{L_s} & 0 & 0 & n_p\dfrac{\Omega}{L_s} \\ 0 & -\dfrac{R_s}{L_s} & -n_p\dfrac{\Omega}{L_s} & 0 \\ 0 & 0 & 0 & -n_p\Omega \\ 0 & 0 & n_p\Omega & 0 \end{bmatrix}, B = \begin{bmatrix} \dfrac{1}{L_s} & 0 \\ 0 & \dfrac{1}{L_s} \\ 0 & 0 \\ 0 & 0 \end{bmatrix}, \vec{V}_s = \begin{bmatrix} v_\alpha \\ v_\beta \end{bmatrix} \qquad (12)$$

dans lesquelles $R_s$ est la résistance du stator du moteur 1, $L_s$ est l'inductance du stator, et $n_p$ est le nombre de paires de pôles du moteur.

Il en résulte que les matrices $F_i$ et $G_j$ introduites dans les équations (6) ont les valeurs suivantes :

$$F_1 = \begin{bmatrix} e^{-\frac{\delta}{\tau_s}} & 0 \\ 0 & e^{-\frac{\delta}{\tau_s}} \end{bmatrix}, \quad F_3 = \begin{bmatrix} 0 & 0 \\ 0 & 0 \end{bmatrix}, \quad F_4 = \begin{bmatrix} \cos\theta & -\sin\theta \\ \sin\theta & \cos\theta \end{bmatrix},$$

$$F_2 = \frac{Z_1}{L_s Z_2^2} \begin{bmatrix} -Z_1\cos\theta + R_s\sin\theta + Z_1 e^{-\frac{\delta}{\tau_s}} & Z_1\sin\theta + R_s\cos\theta - R_s e^{-\frac{\delta}{\tau_s}} \\ -Z_1\sin\theta - R_s\cos\theta + R_s e^{-\frac{\delta}{\tau_s}} & -Z_1\cos\theta + R_s\sin\theta + Z_1 e^{-\frac{\delta}{\tau_s}} \end{bmatrix}$$

$$G_1 = \begin{bmatrix} a & 0 \\ 0 & a \end{bmatrix}, \quad G_2 = \begin{bmatrix} 0 & 0 \\ 0 & 0 \end{bmatrix},$$

dans lesquelles $Z_1 = L_s n_p \Omega$, $\quad Z_2^2 = R_s^2 + Z_1^2$, $\quad \tau_s = \dfrac{L_s}{R_s}$, , $\theta = \delta\, n_p\Omega$ et $\quad a = \dfrac{1}{R_s}\left(1 - e^{-\frac{\delta}{\tau_s}}\right)$.

Il est à noter que ces expressions ne font pas intervenir la position du rotor.

Par ailleurs, pour ce type de moteur, l'équation (5) s'écrit de la manière suivante :

$$\vec{X}_k = \begin{bmatrix} \vec{I} \\ \vec{\Phi} \end{bmatrix}_k = \begin{bmatrix} F_1 & F_2 \\ F_3 & F_4 \end{bmatrix}\begin{bmatrix} \vec{I} \\ \vec{\Phi} \end{bmatrix}_{k-1} + a\begin{bmatrix} v_\alpha \\ v_\beta \end{bmatrix}_{k-1} = \begin{bmatrix} \vec{I}^0 \\ \vec{\Phi}^0 \end{bmatrix}_{k-1} + a\begin{bmatrix} v_\alpha \\ v_\beta \end{bmatrix}_{k-1} \qquad (13)$$

Par conséquent, les évolutions libres du courant statorique et du flux rotorique, $\vec{I}_k^0$ et $\vec{\Phi}_k^0$ s'écrivent de la manière suivante : $\quad \vec{I}_k^0 = \begin{bmatrix} F_1 & F_2 \end{bmatrix}\begin{bmatrix} \vec{I} \\ \vec{\Phi} \end{bmatrix}_{k-1}$ et

$$\vec{\Phi}_k^0 = \vec{\Phi}_k = \begin{bmatrix} F_3 & F_4 \end{bmatrix}\begin{bmatrix} \vec{I} \\ \vec{\Phi} \end{bmatrix}_{k-1} = F_4 \vec{\Phi}_{k-1} \qquad (14)$$

Par ailleurs, d'après l'équation (4), la valeur du couple électromagnétique est définie par l'équation suivante :

$$\Gamma_k = n_p \vec{\Phi}_k \times \vec{I}_k \qquad (15)$$

Si l'on remplace les valeurs du courant statorique et du flux rotorique obtenues par l'équation (13) dans l'expression ci-dessus définissant le couple, on aboutit à une formule dans laquelle le couple se décompose également en une partie à évolution libre et une partie due à la commande de tension :

$$\Gamma_k = \Gamma_k^0 + a\, n_p \vec{\Phi}_k^0 \times \vec{V}_{s,k-1} \qquad (16)$$

la partie du couple à évolution libre étant égale à :

$$\Gamma_k^0 = n_p \vec{\Phi}_k^0 \times \vec{I}_k^0 \qquad (17)$$

Si l'on considère maintenant la quantité :

$$\Delta\Gamma_k = \frac{\Gamma_k - \Gamma_k^0}{n_p} \qquad (18)$$

$$\frac{\Delta\Gamma_k}{a} = \vec{\Phi}_k^0 \times \vec{V}_{ref,k-1} = \Phi_{k,\alpha}^0 v_{\beta,k-1} - \Phi_{k,\beta}^0 v_{\alpha,k-1} \qquad (19)$$

Or, d'après l'équation (14) ,

$$\vec{\Phi}_k^0 = \vec{\Phi}_k = F_4 \vec{\Phi}_{k-1} = \begin{bmatrix} \cos\theta & -\sin\theta \\ \sin\theta & \cos\theta \end{bmatrix} \vec{\Phi}_{k-1} \qquad (20)$$

Par conséquent, dans le cas d'un moteur synchrone à aimants permanents montés en surface, le flux rotorique présente un module constant qui est égal au module du flux magnétique $\left\| \vec{\Phi}_m \right\|$ et tourne à chaque instant d'échantillonnage d'un angle $\theta = \delta n_p \Omega$. Il n'est donc pas possible d'effectuer une régulation à partir d'une valeur de consigne de module de flux magnétique, comme cela est exposé dans la demande de brevet EP 1 045 514.

Comme il n'y a pas d'interférence entre la tension du stator dans l'évolution du flux rotorique, on peut ne considérer que l'équation de couple dans laquelle les deux composantes de la tension du stator $\vec{V}_s$ dans le repère $(\alpha, \beta)$ apparaissent, ce qui laisse un degré de liberté (une équation à deux inconnues). Il en résulte que l'on peut ajouter le contrôle d'un autre paramètre de fonctionnement du moteur en vue de maximiser le couple pour un courant statorique donné en tenant compte des limitations en tension et en courant dans le stator. Par ailleurs, comme précédemment mentionné, le but de la présente invention est de réaliser une commande de couple du type "à réponse pile", c'est-à-dire $\Gamma^* = \Gamma_k$ et de contrôler l'énergie magnétique dans la machine, ce qui revient à contrôler également la projection du courant statorique sur le flux rotorique. En effet, d'après l'équation (4), l'énergie magnétique dans une machine est de la forme :

$$W_k = \vec{\Phi}_k \cdot \vec{I}_k = \vec{\Phi}_k^0 \cdot \vec{I}_k \qquad (21)$$

D'après l'équation (13), le courant du stator est donné par l'équation suivante :

$$\vec{I}_k = \vec{I}_k^0 + a\vec{V}_{s,k-1} \qquad (22)$$

Il en résulte que la quantité :

$$\frac{\Delta W_k}{a}=\frac{W_k-W_k^0}{a}=\frac{\vec{\Phi}_k^0(\vec{I}_k-\vec{I}_k^0)}{a}=\vec{\Phi}_k^0\vec{V}_{s,k-1}=\Phi_{k,\alpha}^0 v_{\alpha,k-1}+\Phi_{k,\beta}^0 v_{\beta,k-1} \quad (23)$$

La loi de commande de la tension $\vec{V}_s$ peut alors être déduite des équations (19) et (23) :

$$\begin{cases} v_{\alpha,k-1}=\dfrac{\Phi_{k,\alpha}^0\left(\Phi_{k,\alpha}^0(I_{k,\alpha}-I_{k,\alpha}^0)+\Phi_{k,\beta}^0(I_{k,\beta}-I_{k,\beta}^0)\right)-\Delta\Gamma\Phi_{k,\beta}^0}{a\left\|\vec{\Phi}_m\right\|^2} \\[4mm] v_{\beta,k-1}=\dfrac{\Phi_{k,\beta}^0\left(\Phi_{k,\alpha}^0(I_{k,\alpha}-I_{k,\alpha}^0)+\Phi_{k,\beta}^0(I_{k,\beta}-I_{k,\beta}^0)\right)+\Delta\Gamma\Phi_{k,\alpha}^0}{a\left\|\vec{\Phi}_m\right\|^2} \end{cases} \quad (24)$$

Cette loi de commande peut également être exprimée de la manière suivante dans le repère $(\alpha, \beta)$ :

$$\begin{bmatrix} v_\alpha \\ v_\beta \end{bmatrix}_{k-1}=\frac{1}{\left\|\vec{\Phi}_m\right\|^2}\begin{bmatrix} \Phi_\alpha^0 & -\Phi_\beta^0 \\ \Phi_\beta^0 & \Phi_\alpha^0 \end{bmatrix}_k\frac{1}{a}\begin{bmatrix} \Delta W_k \\ \Delta\Gamma_k \end{bmatrix} \quad (25)$$

Si l'on considère maintenant la matrice de rotation R suivante :

$$R(\rho_k^0)=\begin{bmatrix} \dfrac{\Phi_\alpha^0}{\left\|\vec{\Phi}_m\right\|} & \dfrac{\Phi_\beta^0}{\left\|\vec{\Phi}_m\right\|} \\[4mm] -\dfrac{\Phi_\beta^0}{\left\|\vec{\Phi}_m\right\|} & \dfrac{\Phi_\alpha^0}{\left\|\vec{\Phi}_m\right\|} \end{bmatrix}_k=\begin{bmatrix} \cos(\rho^0) & \sin(\rho^0) \\ -\sin(\rho^0) & \cos(\rho^0) \end{bmatrix}_k \quad (26)$$

alors la loi de commande peut s'écrire comme suit :

$$\begin{bmatrix} v_\alpha \\ v_\beta \end{bmatrix}_{k-1}=\frac{1}{\left\|\vec{\Phi}_m\right\|}R^{-1}(\rho_k^0)\frac{1}{a}\begin{bmatrix} \Delta W \\ \Delta\Gamma \end{bmatrix}_k \quad (27)$$

La structure du régulateur 3 présente donc la particularité de se baser sur l'évolution libre de la direction du flux rotorique, comme représenté sur la figure 2. Si maintenant, on change de repère de référence, pour se situer dans un repère $(\tilde{d}, \tilde{q})$ lié à l'évolution libre du flux rotorique, l'équation précédente s'écrit d'une manière très simple comme suit :

$$\begin{bmatrix} v_{\tilde{d}} \\ v_{\tilde{q}} \end{bmatrix}_{k-1} = \frac{1}{a\left\|\vec{\Phi}_k^0\right\|} \begin{bmatrix} \Delta W \\ \Delta \Gamma \end{bmatrix}_k = \begin{bmatrix} \dfrac{I_{k,\tilde{d}} - I_{k,\tilde{d}}^0}{a} \\[2ex] \dfrac{I_{k,\tilde{q}} - I_{k,\tilde{q}}^0}{a} \end{bmatrix} \qquad (28)$$

Cette équation exprime la valeur de la tension qu'il faut appliquer en entrée de l'onduleur 3 à l'instant d'échantillonnage k-1 pour obtenir la variation de couple souhaitée à l'instant d'échantillonnage k suivant. On peut constater qu'il y a un découplage parfait entre le contrôle du couple et le contrôle de l'énergie magnétique (angle entre les vecteurs de flux rotorique et de courant statorique et le module du vecteur de courant statorique), $v_{\tilde{q}}$ ne dépendant que de la variation du couple électromagnétique de la machine 1.

Il est à noter également que le repère $(\tilde{d}, \tilde{q})$ qui est lié au flux rotorique discrétisé tourne par saut à chaque instant d'échantillonnage et équivalent au repère (d, q) du modèle continu classique .

En définitive, grâce au fait que l'on passe en temps discret dès la modélisation de l'état de la machine et par un choix approprié du repère, on aboutit d'une manière surprenante à un modèle très simple pour les moteurs de type synchrone à pôles lisses. Dans le cas d'un moteur dont les pôles lisses du rotor sont constitués par des bobinages, le flux magnétique ou rotorique peut en outre être commandé en amplitude.

Plusieurs stratégies de commande peuvent être appliquées suivant la vitesse $\Omega$ du moteur.

A basse vitesse $\Omega$, le couple est maximum pour un courant donné, lorsque l'énergie magnétique W est nulle. Cela signifie que le courant du stator est en quadrature avec le flux rotorique ou magnétique. Par contre, lorsque le moteur tourne à une vitesse au delà d'une certaine limite, le couple disponible diminue progressivement, tandis que la puissance fournie par la machine est maximum. L'énergie magnétique consommée ne peut alors plus être nulle. Cette limitation en vitesse pour un couple donné est due notamment aux limitations en tension et courant de l'onduleur.

A basse vitesse, la stratégie à appliquer est illustrée par la figure 3. Cette figure représente les différents vecteurs impliqués dans l'équation d'état (1), à savoir :

$$\frac{d\vec{I}_s}{dt} = -\frac{R_s}{L_s}\vec{I}_s + n_p \frac{\Omega}{L_s}\begin{bmatrix} 0 & 1 \\ -1 & 0 \end{bmatrix}\vec{\Phi} + \frac{1}{L_s}\vec{V}_s \qquad (29)$$

d'où :

$$\vec{V}_s = L_s \frac{d\vec{I}_s}{dt} + R_s \vec{I}_s + n_p \Omega \underbrace{\begin{bmatrix} 0 & -1 \\ 1 & 0 \end{bmatrix}\vec{\Phi}}_{} \qquad (30)$$
$$= L_s \frac{d\vec{I}_s}{dt} + R_s \vec{I}_s + \vec{V}_f$$

Il est à noter que le vecteur $\vec{V}_f$ est perpendiculaire au vecteur de flux $\vec{\Phi}$ et donc parallèle au vecteur de courant $\vec{I}_s$.

Pour une vitesse et un couple de consigne donnés, si le module de la tension du stator calculée par le régulateur 3 est inférieur à la tension fournie par l'onduleur $\vec{V}_s$, la stratégie de commande peut consister à forcer la composante $I_{k,\tilde{d}}$ à zéro pour que le courant statorique et le flux rotorique soient en quadrature. Ce qui conduit à la loi de commande suivante :

$$\begin{bmatrix} v_{\tilde{d}} \\ v_{\tilde{q}} \end{bmatrix}_{k-1} = \begin{bmatrix} \dfrac{-I^0_{k,\tilde{d}}}{a} \\ \dfrac{\Delta\Gamma_k}{a\left\|\vec{\Phi}^0_k\right\|} \end{bmatrix} \qquad (31)$$

la valeur de $I^0_{k,\tilde{d}}$ étant donnée par les formules (14).

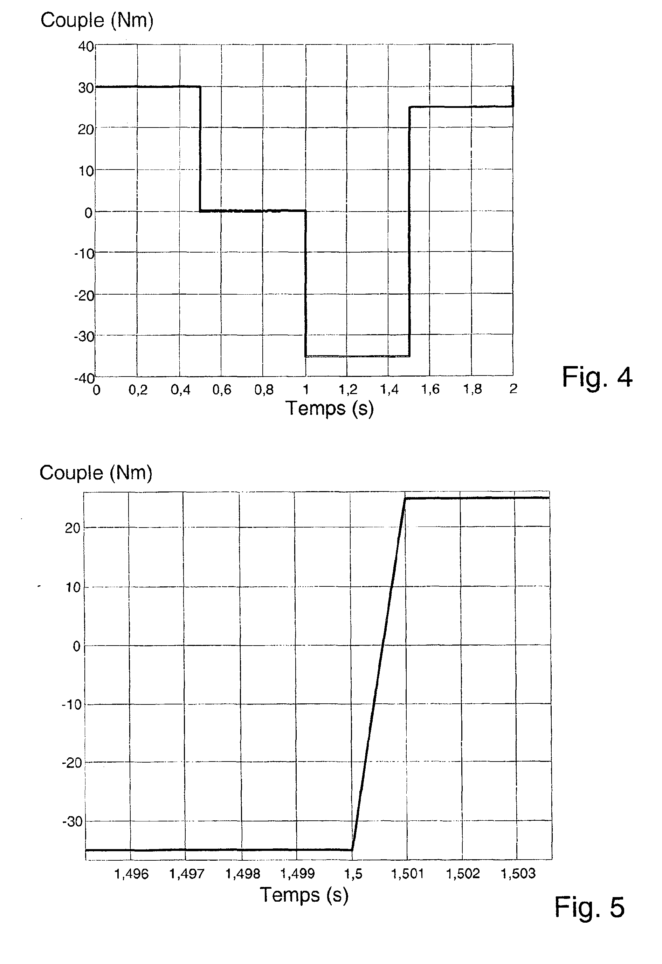

Sur la figure 4, on a représenté un exemple de courbe d'évolution du couple demandé au moteur, en fonction du temps. Cette courbe montre notamment qu'à l'instant t = 1,5 s, le couple est passé de -35 Nm à +25 Nm. Si l'on se reporte maintenant à la courbe montrée sur la figure 5 qui montre plus en détail l'évolution du couple au voisinage de cet instant, lorsque le moteur tourne à basse vitesse, on peut constater que le couple est passé de la première valeur à la seconde en une période d'échantillonnage, soit 1 ms.

A haute vitesse, pour un couple de consigne donné et lorsque la valeur de tension de commande correspondante est plus grande que celle $\vec{V}_s$ que peut délivrer l'onduleur 2, la stratégie précédente ne peut pas être appliquée. Il est donc nécessaire de limiter la tension du stator en diminuant le flux statorique qui est donné par l'équation suivante :

$$\vec{\Phi}_s = \vec{\Phi}_k + L_s \vec{I}_k \qquad (32)$$

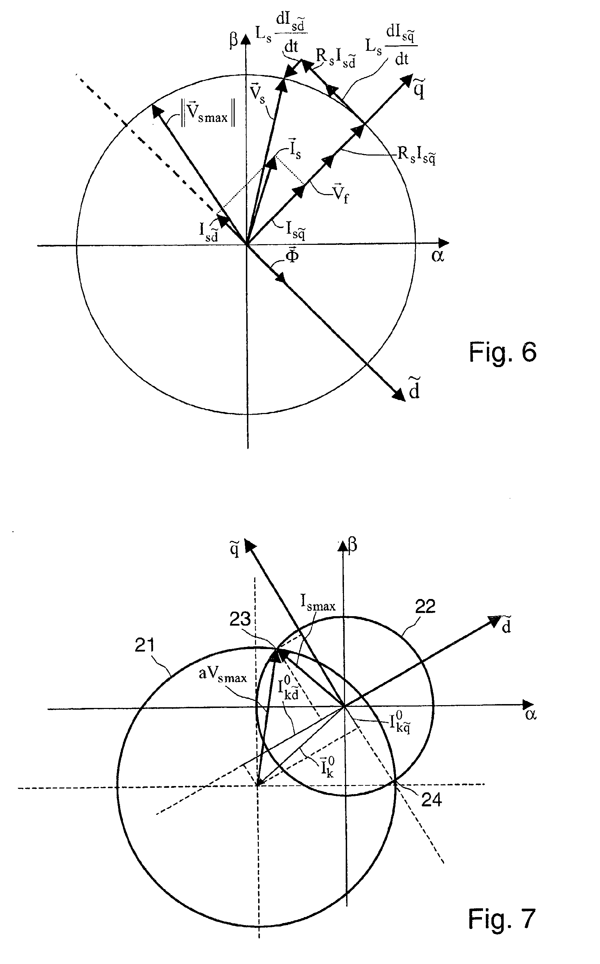

Puisque le flux rotorique est constant, le flux statorique peut être diminué en modifiant le module du courant statorique et l'angle entre le vecteur de courant statorique et le flux magnétique, comme représenté sur la figure 6.

La stratégie de commande à vitesse élevée est illustrée par la figure 6 dans laquelle le courant statorique et le flux rotorique ne peuvent plus être en quadrature, le flux statorique pouvant alors être en partie compensé par la composante $I_{k,\tilde{d}}$ du courant statorique.

Dans cette stratégie, on suppose que la tension du stator est maximum, c'est-à-dire :

$$v_{\tilde{d}}^2 + v_{\tilde{q}}^2 = \left\|\vec{V}_{s\,max}\right\|^2 \qquad (33)$$

A partir de l'équation précédente et de l'équation (28), on obtient l'équation suivante :

$$\left(I_{k,\tilde{d}} - I^0_{k,\tilde{d}}\right)^2 + \left(I_{k,\tilde{q}} - I^0_{k,\tilde{q}}\right)^2 = \left(a\left\|\vec{V}_{s\,max}\right\|\right)^2 \qquad (34)$$

On suppose également que l'intensité du courant statorique est maximum, c'est-à-dire :

$$I_{k,\tilde{d}}^2 + I_{k,\tilde{q}}^2 = \left\|\vec{I}_{s\,max}\right\|^2 \qquad (35)$$

Ces deux dernières équations représentent les équations de deux cercles, le premier cercle 21 (figure 7) étant centré sur l'extrémité du vecteur $\vec{I}^0_k$ et ayant un rayon égal à $a\left\|\vec{V}_{s\,max}\right\|$, et le second 22 étant centré sur l'origine

du repère $(\tilde{d}, \tilde{q})$ et ayant un rayon égal à $\left\|\vec{I}_{smax}\right\|^2$.

Les deux équations (34) et (35) sont donc satisfaites aux points d'intersection 23 et 24 de ces deux cercles. En fait, un seul de ces deux points (point 23) est optimal pour la commande de la machine, c'est celui qui correspond à une composante $I_{k,\tilde{d}}$ de courant statorique sur l'axe $\tilde{d}$, négative pour réduire le flux statorique. La valeur de cette composante peut être obtenue à l'aide de l'équation (35) :

$$I_{k,\tilde{d}} = -\sqrt{\left\|\vec{I}_{smax}\right\|^2 - I_{k,\tilde{q}}^2} \qquad (36)$$

En outre, la zone délimitée par l'intersection des deux cercles 21 et 22 correspond aux valeurs possibles de tension et de courant statorique. Par conséquent, une consigne de couple peut être obtenue en "un coup" (une seule période d'échantillonnage) si la condition suivante résultant des équations (28) et (34) est réalisée :

$$\left(\frac{\Delta\Gamma_k}{\left\|\vec{\Phi}_m\right\|}\right)^2 \le a^2 \left\|\vec{V}_{smax}\right\|^2 - (I_{k,\tilde{d}} - I_{k,\tilde{d}}^0)^2 \qquad (37)$$

ou bien :

$$I_{k,\tilde{d}}^2 \le \left\|\vec{I}_{smax}\right\|^2 - \left(\frac{\Delta\Gamma}{\left\|\vec{\Phi}_p^0\right\|} + I_{k,\tilde{q}}^0\right)^2 \qquad (38)$$

Cette seconde condition résultant des équations (28) et (35).

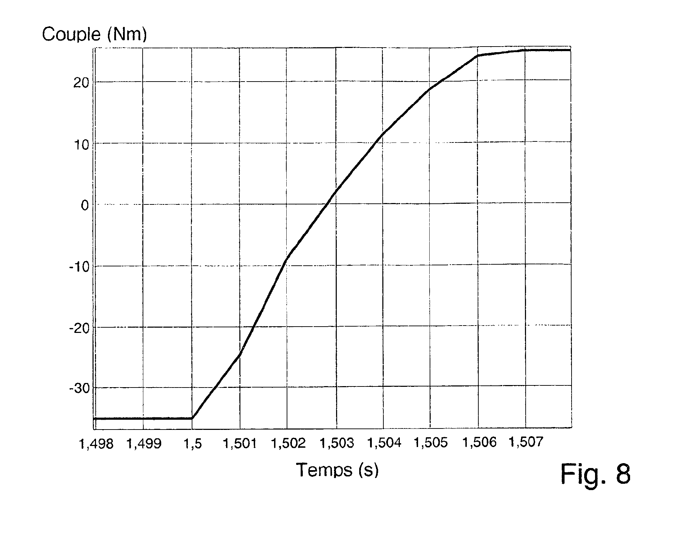

Sur la vue agrandie représentée sur la figure 8, on peut constater que la valeur de couple 25 Nm a été atteinte en 7 périodes d'échantillonnage soit 7 ms, en appliquant à chaque période d'échantillonnage des valeurs de consigne de couple intermédiaires.

Il est à noter que les équations qui modélisent le fonctionnement du moteur 1 et de l'onduleur 2 selon l'invention sont très simples et ne résultent pas d'approximations. Elles peuvent donc être mises en oeuvre à l'aide de moyens de calculs relativement modestes. En outre, ces équations ne nécessitent pas la connaissance de la position du rotor par rapport au stator, à chaque période d'échantillonnage.

## Revendications

1. Procédé de régulation d'une machine électrique tournante (1) recevant en entrée une tension de commande discrète déterminée de manière à asservir le couple électromagnétique $(\Gamma_k)$ délivré par la machine (1), sur une valeur de consigne $(\Gamma^*)$ de couple, ce procédé consistant à déterminer à chaque instant d'échantillonnage (k-1), la tension de commande discrète $(\vec{V}_{s,k-1})$ à appliquer à la machine (1) en fonction d'au moins un signal échantillonné $(\vec{I}_k, \Phi_k, \Omega_k)$ représentatif du couple électromagnétique $(\Gamma_k)$ de la machine, pour atteindre la valeur de consigne de couple $(\Gamma^*)$ à l'instant d'échantillonnage (k) suivant, **caractérisé en ce qu'**il comprend :

   - une étape préalable de détermination d'une loi de commande en tension discrète de la machine (1), dans laquelle la tension de commande discrète $(\vec{V}_{s,k-1})$ à appliquer chaque instant d'échantillonnage (k), est déterminée sous la forme :

$$\vec{V}_{s,k-1} = \vec{f}(\Delta\Gamma_k, \Delta\overline{W}_k)$$

dans laquelle f est une fonction donnant la tension de commande à appliquer à l'instant d'échantillonnage k-1 pour atteindre les valeurs de consigne en couple et énergie, en fonction des variables $\Delta\Gamma_k$ et $\Delta W_k$ représentant respectivement l'écart entre le couple électromagnétique de la machine à atteindre ($\Gamma^*$) à l'instant d'échantillonnage k suivant et la composante d'évolution libre $(\Gamma'_k{}^0)$ de ce couple en l'absence de commande à cet instant, et l'écart entre l'énergie magnétique ($W_k$) consommée par la machine à l'instant k et la composante d'évolution libre $(\overline{W}_k{}^0)$ (Wk) de cette énergie en l'absence de commande à cet instant,

- à chaque instant d'échantillonnage, une étape de détermination, à l'aide de la loi de commande discrète, de la tension de commande ($V_{s,k-1}$) à appliquer à la machine pour que le couple de la machine atteigne le couple de consigne ($\Gamma^*$), et l'énergie magnétique consommée par la machine corresponde à une valeur de consigne d'énergie magnétique ($W^*$).

2. Procédé de régulation selon la revendication 1,
   **caractérisé en ce que** la valeur de consigne d'énergie ($W^*$) est une valeur minimum.

3. Procédé de régulation selon l'une des revendications 1 à 2,
   **caractérisé en ce que** la loi de commande discrète est déterminée dans un repère ($\tilde{d}$, $\tilde{q}$) lié à l'évolution libre en temps discret du flux rotorique dans la machine.

4. Procédé de régulation selon l'une des revendications 1 à 3,
   **caractérisé en ce que** la machine (1) est de type synchrone à pôles lisses, et **en ce que** la loi de commande discrète déterminée au cours de l'étape préalable est de la forme suivante :

$$\begin{bmatrix} v_{\tilde{d}} \\ v_{\tilde{q}} \end{bmatrix}_{k-1} = \frac{1}{a\left\|\vec{\Phi}_k^0\right\|} \begin{bmatrix} \Delta W \\ \Delta\Gamma \end{bmatrix}_k$$

dans laquelle $v_{\tilde{d},k-1}$ et $v_{\tilde{q},k-1}$ représentent les composantes du vecteur de tension de commande à l'instant k-1, exprimées dans un repère ($\tilde{d}$, $\tilde{q}$) mobile en temps discret et lié à l'évolution libre $\vec{\Phi}_k^0$ du flux rotorique dans la machine à l'instant suivant k, "a" est une constante, $\left\|\vec{\Phi}_k^0\right\|$ correspond au module de l'évolution libre du flux rotorique à l'instant suivant k, $\Delta\Gamma_k$ et $\Delta W_k$ représentant respectivement l'écart entre le couple électromagnétique de la machine à atteindre à l'instant d'échantillonnage k suivant et la composante d'évolution libre de ce couple à cet instant, et l'écart entre l'énergie magnétique consommée par la machine à l'instant k et la composante d'évolution libre de cette énergie à cet instant.

5. Procédé de régulation selon l'une des revendications 1 à 4, **caractérisé en ce que** la machine (1) est de type synchrone à aimants permanents montés en surface.

6. Procédé de régulation selon l'une des revendications 1 à , **caractérisé en ce que** la machine (1) est de type synchrone à pôles lisses bobinés.

7. Procédé de régulation selon la revendication 5 ou 6,
   **caractérisé en ce qu'**il comprend la mise en oeuvre d'une stratégie à basse vitesse lorsque la machine (1) tourne à une vitesse inférieure à un seuil prédéfini, cette stratégie consistant à déterminer la tension de commande à appliquer à la machine pour atteindre à l'instant d'échantillonnage suivant le couple de consigne avec un apport d'énergie magnétique nul.

8. Procédé de régulation selon la revendication 7,
   **caractérisé en ce que** la stratégie à basse vitesse consiste à appliquer la loi de commande discrète suivante :

$$\begin{bmatrix} v_{\tilde{d}} \\ v_{\tilde{q}} \end{bmatrix}_{k-1} = \begin{bmatrix} \dfrac{-I^0_{k,\tilde{d}}}{a} \\ \dfrac{\Delta\Gamma_k}{a\left\|\vec{\Phi}^0_k\right\|} \end{bmatrix}$$

dans lequel $I^0_{k,\tilde{d}}$ est la composante de l'évolution libre du courant statorique, suivant l'axe $\tilde{d}$ du repère $(\tilde{d}, \tilde{q})$ lié à l'évolution libre du flux rotorique durant la période d'échantillonnage entre les instants d'échantillonnages k-1 et k, "a" est une constante, $\left\|\vec{\Phi}^0_k\right\|$ correspond au module de l'évolution libre du flux rotorique à l'instant suivant k, et $\Delta\Gamma_k$ représente l'écart entre le couple électromagnétique de la machine à atteindre à l'instant d'échantillonnage k suivant et la composante d'évolution libre de ce couple à cet instant.

9. Procédé de régulation selon l'une des revendications 5 à 8, **caractérisé en ce qu'**il comprend la mise en oeuvre d'une stratégie à haute vitesse lorsque la machine (1) tourne à une vitesse supérieure à un seuil prédéfini, cette stratégie consistant à tenir compte des limitations de l'onduleur (2), pour déterminer une valeur de couple de consigne intermédiaire que la machine peut atteindre à l'instant d'échantillonnage suivant, avec une énergie magnétique consommée donnée.

10. Procédé de régulation selon la revendication 9,
    **caractérisé en ce que** la stratégie à haute vitesse comprend la résolution du système d'équations suivant :

$$\left(I_{k,\tilde{d}} - I^0_{k,\tilde{d}}\right)^2 + \left(I_{k,\tilde{q}} - I^0_{k,\tilde{q}}\right)^2 = \left(a\left\|\vec{V}_{s\max}\right\|\right)^2$$

$$I^2_{k,\tilde{d}} + I^2_{k,\tilde{q}} = \left\|\vec{I}_{s\max}\right\|^2$$

dans lequel $I_{k,\tilde{d}}$ et $I_{k,\tilde{q}}$ sont les composantes du courant statorique dans le repère $(\tilde{d}, \tilde{q})$ à l'instant k, $I^0_{k,\tilde{d}}$ et $I^0_{k,\tilde{q}}$ sont les composantes de l'évolution libre du courant statorique dans ce repère au même instant, $\|\vec{V}_{s\max}\|$ et $\|\vec{I}_{s\max}\|$ sont respectivement les modules de la tension maximum et du courant maximum dans le stator, et "a" une constante, la tension de commande étant obtenue à l'aide de l'équation suivante :

$$\begin{bmatrix} v_{\tilde{d}} \\ v_{\tilde{q}} \end{bmatrix}_{k-1} = \begin{bmatrix} \dfrac{I_{k,\tilde{d}} - I^0_{k,\tilde{d}}}{a} \\ \dfrac{I_{k,\tilde{q}} - I^0_{k,\tilde{q}}}{a} \end{bmatrix}.$$

11. Dispositif de régulation d'une machine tournante, comprenant un onduleur, un régulateur recevant en entrée une valeur de consigne de couple électromagnétique et au moins un signal échantillonné représentatif du couple électromagnétique de la machine et délivrant à l'onduleur une commande adaptée pour asservir le couple électromagnétique de la machine sur la valeur de consigne de couple ($\Gamma^*$), par prédiction, à chaque instant d'échantillonnage, de la valeur de couple électromagnétique à l'instant d'échantillonnage suivant et modification consécutive de la commande, **caractérisé en ce que** le régulateur comprend :

- une loi de commande discrète de la machine, stockée en mémoire, cette loi de commande donnant la tension de commande discrète ($\vec{V}_{s,k-1}$) à appliquer chaque instant d'échantillonnage (k), qui est déterminée sous la forme :

$$\vec{V}_{s,k-1} = \vec{f}(\Delta\Gamma_k, \Delta W_k)$$

dans laquelle f est une fonction donnant la tension de commande à appliquer à l'instant d'échantillonnage k-1 pour atteindre les valeurs de consigne en couple et énergie, en fonction des variables $\Delta\Gamma_k$ et $\Delta W_k$ représentant respectivement l'écart entre le couple électromagnétique de la machine à atteindre ($\Gamma_k^0$) à l'instant d'échantillonnage k suivant et la composante d'évolution libre ($\Gamma_k^*$) de ce couple en l'absence de commande à cet instant, et l'écart entre l'énergie magnétique ($W_k$) consommée par la machine à l'instant k et la composante d'évolution libre ($W_k^0$) cette énergie en l'absence de commande à cet instant, et

- des moyens pour déterminer à chaque instant d'échantillonnage, à l'aide de la loi de commande discrète, la tension de commande ($\vec{V}_{s,k-1}$) à appliquer à la machine pour que le couple électromagnétique de la machine atteigne le couple de consigne ($\Gamma^*$), et l'énergie magnétique consommée par la machine corresponde à une valeur de consigne d'énergie ($W^*$).

**Patentansprüche**

1. Verfahren zur Regelung einer rotierenden elektrischen Maschine (1), die am Eingang eine diskrete Steuerspannung empfängt, welche so festgelegt ist, dass das von der Maschine (1) gelieferte elektromagnetische Drehmoment ($\Gamma_k$) auf einen Drehmoment-Sollwert ($\Gamma^*$) geregelt wird, wobei dieses Verfahren darin besteht, zu jedem Abtastzeitpunkt (k-1) die an die Maschine (1) anzulegende diskrete Steuerspannung ($\vec{V}_{s,k-1}$) abhängig von mindestens einem abgetasteten Signal ($I_k$, $\Phi_k$, $\Omega_k$) festzulegen, das für das elektromagnetische Drehmoment ($\Gamma_k$) der Maschine repräsentativ ist, um den Drehmoment-Sollwert ($\Gamma^*$) zum folgenden Abtastzeitpunkt (k) zu erreichen, **dadurch gekennzeichnet, dass** es enthält:

- einen vorhergehenden Schritt der Festlegung eines diskreten Spannungssteuerungsgesetzes der Maschine (1), wobei die zu jedem Abtastzeitpunkt (k) anzulegende diskrete Steuerspannung ($\vec{V}_{s,k-1}$) in folgender Form festgelegt wird:

$$\vec{V}_{s,k-1} = \vec{f}(\Delta\Gamma_k, \Delta W_k)$$

in der f eine Funktion ist, die die zum Abtastzeitpunkt k-1 anzulegende Steuerspannung angibt, um die Drehmoment- und Energie-Sollwerte zu erreichen, abhängig von den Variablen $\Delta\Gamma_k$ und $\Delta W_k$, die die Abweichung zwischen dem zum folgenden Abtastzeitpunkt k zu erreichenden elektromagnetischen Drehmoment der Maschine ($\Gamma^*$) und der freien Entwicklungskomponente ($\Gamma_k^0$) dieses Drehmoments in Abwesenheit einer Steuerung zu diesem Zeitpunkt, bzw. die Abweichung zwischen der von der Maschine zum Zeitpunkt k verbrauchten magnetischen Energie ($W_k$) und der freien Entwicklungskomponente ($W_k^0$) dieser Energie in Abwesenheit einer Steuerung zu diesem Zeitpunkt darstellen,

- zu jedem Abtastzeitpunkt, einen Schritt der Festlegung, mit Hilfe des diskreten Steuergesetzes, der an die Maschine anzulegenden Steuerspannung ($\vec{V}_{sk\text{-}1}$), damit das Drehmoment der Maschine das Solldrehmoment ($\Gamma^*$) erreicht, und die von der Maschine verbrauchte magnetische Energie einem Sollwert magnetischer Energie ($W^*$) entspricht.

2. Regelungsverfahren nach Anspruch 1, **dadurch gekennzeichnet, dass** der Energiesollwert ($W^*$) ein Mindestwert ist.

3. Regelungsverfahren nach einem der Ansprüche 1 bis 2, **dadurch gekennzeichnet, dass** das diskrete Steuergesetz in einem Bezugssystem ($\tilde{d},\tilde{q}$) festgelegt wird, das mit der zeitdiskreten freien Entwicklung des Rotorflusses in der Maschine verbunden ist.

4. Regelungsverfahren nach einem der Ansprüche 1 bis 3, **dadurch gekennzeichnet, dass** die Maschine (1) von der Art Synchronmaschine mit Vollpolen ist, und dass das während des vorhergehenden Schritts festgelegte diskrete Steuergesetz von folgender Form ist:

$$\begin{bmatrix} v_{\tilde{d}} \\ v_{\tilde{q}} \end{bmatrix}_{k-1} = \frac{1}{a\left\|\vec{\Phi}_k^0\right\|}\begin{bmatrix} \Delta W \\ \Delta \Gamma \end{bmatrix}_k$$

wobei $v_{\tilde{d},k\text{-}1}$ und $v_{\tilde{q},k\text{-}1}$ die Komponenten des Steuerspannungsvektors zum Zeitpunkt k-1 darstellen, ausgedrückt in einem zeitdiskret beweglichen und mit der freien Entwicklung $\vec{\Phi}_k^0$ des Rotorflusses in der Maschine zum folgenden Zeitpunkt k verbundenen Bezugssystem ($\tilde{d},\tilde{q}$), "a" eine Konstante ist, $\left\|\vec{\Phi}_k^0\right\|$ dem Modul der freien Entwicklung des Rotorflusses zum folgenden Zeitpunkt k entspricht, $\Delta\Gamma_k$ und $\Delta W_k$ die Abweichung zwischen dem zum folgenden Abtastzeitpunkt k zu erreichenden elektromagnetischen Drehmoment und der freien Entwicklungskomponente dieses Drehmoments zu diesem Zeitpunkt, bzw. die Abweichung zwischen der von der Maschine zum Zeitpunkt k verbrauchten magnetischen Energie und der freien Entwicklungskomponente dieser Energie zu diesem Zeitpunkt darstellen.

5. Regelungsverfahren nach einem der Ansprüche 1 bis 4, **dadurch gekennzeichnet, dass** die Maschine (1) von der Art Synchronmaschine mit oberflächenmontierten Dauermagneten ist.

6. Regelungsverfahren nach einem der Ansprüche 1 bis, **dadurch gekennzeichnet, dass** die Maschine (1) von der Art Synchronmaschine mit gewickelten Vollpolen ist.

7. Regelungsverfahren nach Anspruch 5 oder 6, **dadurch gekennzeichnet, dass** es die Durchführung einer Strategie bei niedriger Geschwindigkeit enthält, wenn die Maschine (1) mit einer Geschwindigkeit unterhalb einer vordefinierten Schwelle dreht, wobei diese Strategie darin besteht, die an die Maschine anzulegende Steuerspannung, um zum folgenden Abtastzeitpunkt das Solldrehmoment zu erreichen, mit einer magnetischen Energiezufuhr Null festzulegen.

8. Regelungsverfahren nach Anspruch 7, **dadurch gekennzeichnet, dass** die Strategie mit niedriger Geschwindigkeit darin besteht, das folgende diskrete Steuergesetz anzuwenden:

$$\begin{bmatrix} v_{\tilde{d}} \\ v_{\tilde{q}} \end{bmatrix}_{k-1} = \begin{bmatrix} \dfrac{-I^0_{k,\tilde{d}}}{a} \\ \dfrac{\Delta\Gamma_k}{a\left\|\vec{\Phi}^0_k\right\|} \end{bmatrix}$$

wobei $I^0_{k,\tilde{d}}$ die Komponente der freien Entwicklung des Statorstroms gemäß der Achse $\tilde{d}$ des Bezugssystems ($\tilde{d}$, $\tilde{q}$) ist, die mit der freien Entwicklung des Rotorflusses während der Abtastperiode zwischen den Abtastzeitpunkten k-1 und k verbunden ist, "a" eine Konstante ist, $\left\|\vec{\Phi}^0_k\right\|$ dem Modul der freien Entwicklung des Rotorflusses zum folgenden Zeitpunkt k entspricht, und $\Delta\Gamma_k$ die Abweichung zwischen dem zum folgenden Abtastzeitpunkt k zu erreichenden elektromagnetischen Drehmoment der Maschine und der freien Entwicklungskomponente dieses Drehmoments zu diesem Zeitpunkt darstellt.

9. Regelungsverfahren nach einem der Ansprüche 5 bis 8, **dadurch gekennzeichnet, dass** es die Durchführung einer Strategie mit hoher Geschwindigkeit enthält, wenn die Maschine (1) mit einer Geschwindigkeit oberhalb einer vordefinierten Schwelle dreht, wobei diese Strategie darin besteht, Begrenzungen des Wechselrichters (2) zu berücksichtigen, um einen Zwischensolldrehmomentwert festzulegen, den die Maschine zum folgenden Abtastzeitpunkt mit einer gegebenen verbrauchten magnetischen Energie erreichen kann.

10. Regelungsverfahren nach Anspruch 9, **dadurch gekennzeichnet, dass** die Strategie mit hoher Geschwindigkeit die Auflösung des folgenden Gleichungssystems enthält:

$$\left(I_{k,\tilde{d}} - I^0_{k,\tilde{d}}\right)^2 + \left(I_{k,\tilde{q}} - I^0_{k,\tilde{q}}\right)^2 = \left(a\left\|\vec{V}_{s\max}\right\|\right)^2$$

$$I^2_{k,\tilde{d}} + I^2_{k,\tilde{q}} = \left\|\vec{I}_{s\max}\right\|^2$$

bei dem $I_{k,\tilde{d}}$ und $I_{k,\tilde{q}}$ die Komponenten des Statorstroms im Bezugssystem ($\tilde{d},\tilde{q}$) zum Zeitpunkt k sind, $I^0_{k,\tilde{d}}$ und $I^0_{k,\tilde{q}}$ die Komponenten der freien Entwicklung des Statorstroms in diesem Bezugssystem zum gleichen Zeitpunkt sind, $\|\vec{V}_{s\max}\|$ und $\|\vec{I}_{s\max}\|$ die Module der maximalen Spannung bzw. des maximalen Stroms im Stator sind, und "$a$" eine Konstante ist, wobei die Steuerspannung mit Hilfe der folgenden Gleichung erhalten wird:

$$\begin{bmatrix} v_{\tilde{d}} \\ v_{\tilde{q}} \end{bmatrix}_{k-1} = \begin{bmatrix} \dfrac{I_{k,\tilde{d}} - I^0_{k,\tilde{d}}}{a} \\ \dfrac{I_{k,\tilde{q}} - I^0_{k,\tilde{q}}}{a} \end{bmatrix}.$$

11. Vorrichtung zur Regelung einer rotierenden Maschine, die einen Wechselrichter, einen Regler, der am Eingang einen Sollwert eines elektromagnetischen Drehmoments und mindestens ein für das elektromagnetische Drehmoment der Maschine repräsentatives abgetastetes Signal empfängt und an den Wechselrichter eine Steuerung liefert, die geeignet ist, um das elektromagnetische Drehmoment der Maschine auf den Drehmomentsollwert ($\Gamma^*$) zu regeln, durch Vorhersage, zu jedem Abtastzeitpunkt, des elektromagnetischen Drehmomentwerts zum folgenden Abtastzeitpunkt und nachfolgende Änderung der Steuerung, **dadurch gekennzeichnet, dass** der Regler enthält:

- ein gespeichertes diskretes Steuergesetz der Maschine, wobei dieses Steuergesetz die zu jedem Abtastzeitpunkt (k) anzulegende diskrete Steuerspannung ($\vec{V}_{s,k-1}$) angibt, die in folgender Form festgelegt wird:

$$\vec{V}_{s,k-1} = \vec{f}\left(\Delta\Gamma_k, \Delta W_k\right)$$

in der f eine Funktion ist, die die zum Abtastzeitpunkt k-1 anzulegende Steuerspannung angibt, um die Drehmoment- und Energie-Sollwerte zu erreichen, abhängig von den Variablen $\Delta\Gamma_k$ und $\Delta W_k$, die die Abweichung zwischen dem zum folgenden Abtastzeitpunkt k zu erreichenden elektromagnetischen Drehmoment der Maschine ($\Gamma_k^*$) und der freien Entwicklungskomponente $\{\Gamma_k^0\}$ dieses Drehmoments in Abwesenheit einer Steuerung zu diesem Zeitpunkt, bzw. die Abweichung zwischen der von der Maschine zum Zeitpunkt k verbrauchten magnetischen Energie ($W_k$) und der freien Entwicklungskomponente $\{W_k^0\}$ dieser Energie in Abwesenheit einer Steuerung zu diesem Zeitpunkt darstellen, und

- Einrichtungen, um zu jedem Abtastzeitpunkt mit Hilfe des diskreten Steuergesetzes die an die Maschine anzulegenden Steuerspannung ($\vec{V}_{s,k-1}$) festzulegen, damit das Drehmoment der Maschine das Solldrehmoment ($\Gamma^*$) erreicht, und die von der Maschine verbrauchte magnetische Energie einem Sollwert magnetischer Energie ($W^*$) entspricht.

## Claims

1. Method of regulating a rotating electrical machine (1) receiving as input a discrete control voltage determined to slave the electromagnetic torque ($\Gamma_k$) delivered by the machine (1) to a set point torque ($\Gamma^*$), said method consisting of determining at each sampling time (k-1) the discrete control voltage ($\vec{V}_{s,k-1}$) to be applied to the machine (1) as a function of at least one sampled signal ($I_k$, $\Phi_k$, $\Omega_k$) representing the electromagnetic torque ($\Gamma_k$) of the machine, so that the set point torque ($\Gamma^*$) is reached at the next sampling time (k), which method is **characterized in that** it includes:

- a preparatory step of determining a discrete voltage control law of the machine (1), in which the discrete control voltage ($\vec{V}_{sk-1}$) to be applied at each sampling time (k) is determined in the form:

$$\vec{V}_{s,k-1} = \vec{f}(\Delta\Gamma_k, \Delta W_k)$$

in which f is a function giving the control voltage to be applied at sampling time k-1 to reach the set point torque and energy as a function of variables $\Delta\Gamma_k$ and $\Delta W_k$ respectively representing the difference between the electromagnetic torque of the machine to be reached ($\Gamma^*$) at the next sampling time k and the free evolution component ($\Gamma_k^0$) of said torque in the absence of control at said time and the difference between the magnetic energy ($W_k$) consumed by the machine at time k and the free evolution component ($W_k^0$) of said energy in the absence of control at said time,

- at each sampling time, a step of determining, with the aid of the discrete control law, the control voltage ($\vec{V}_{s,k-1}$) to be applied to the machine for the torque of the machine to reach the set point torque ($\Gamma^*$) and the magnetic energy consumed by the machine to correspond to a set point magnetic energy ($W^*$).

2. Regulation method according to Claim 1, **characterized in that** the set point energy ($W^*$) is a minimum energy.

3. Regulation method according to either of Claims 1 and 2, **characterized in that** the discrete control law is determined in a system of axes ($\tilde{d}, \tilde{q}$) fixed with respect to the free evolution in discrete time of the rotor flux of the machine.

4.  Regulation method according to any of Claims 1 to 3, **characterized in that** the machine (1) is a synchronous machine with smooth poles and the discrete control law determined during the preparatory step is of the following form:

$$\begin{bmatrix} v_{\tilde{d}} \\ v_{\tilde{q}} \end{bmatrix}_{k-1} = \frac{1}{a\left\|\vec{\Phi}_k^0\right\|}\begin{bmatrix} \Delta W \\ \Delta \Gamma \end{bmatrix}_k$$

in which $v_{\tilde{d},k-1}$ and $v_{\tilde{q},k-1}$ represent the components of the control voltage vector at time k-1, expressed in a system of axes $(\tilde{d},\tilde{q})$ that is mobile in discrete time and fixed with respect to the free evolution $\vec{\Phi}_k^0$ of the rotor flux in the machine at the next sampling time k,

"a" is a constant, and $\left\|\vec{\Phi}_k^0\right\|$ corresponds to the modulus of the free evolution of the rotor flux at the next time sampling k, $\Delta\Gamma_k$ and $\Delta W_k$ respectively representing the difference between the electromagnetic torque of the machine to be reached at the next sampling time k and the component of free evolution of said torque at said time and the difference between the magnetic energy consumed by the machine at the sampling time k and the component of free evolution of said energy at said time.

5.  Regulation method according to any of Claims 1 to 4, **characterized in that** the machine (1) is a synchronous machine with surface-mounted permanent magnets.

6.  Regulation method according to any of Claims 1 to , **characterized in that** the machine (1) is a synchronous machine with wound smooth poles.

7.  Regulation method according to Claim 5 or 6, **characterized in that**, when the machine (1) is rotating at a speed less than a predefined threshold, it includes implementing a low-speed strategy consisting of determining the control voltage to be applied to the machine to reach the set point torque at the next sampling time with zero magnetic energy input.

8.  Regulation method according to Claim 7, **characterized in that** the low-speed strategy consists of applying the following discrete control law:

$$\begin{bmatrix} v_{\tilde{d}} \\ v_{\tilde{q}} \end{bmatrix}_{k-1} = \begin{bmatrix} \dfrac{-I_{k,\tilde{d}}^0}{a} \\ \dfrac{\Delta\Gamma_k}{a\left\|\vec{\Phi}_k^0\right\|} \end{bmatrix}$$

in which $I_{k,\tilde{d}}^0$ is the component of the free evolution of the stator current along the axis $\tilde{d}$ of the system of axes $(\tilde{d},\tilde{q})$ fixed with respect to the free evolution of the rotor flux during the sampling period between the sampling times k-1 and k, "a" is a constant, $\left\|\vec{\Phi}_k^0\right\|$ corresponds to the modulus of the free evolution of the rotor flux at the next sampling time k, and $\Delta\Gamma_k$ represents the difference between the electromagnetic torque of the machine to be reached at the next sampling time k and the component of free evolution of said torque at said time.

9.  Regulation method according to any of Claims 5 to 8, **characterized in that**, when the machine (1) is rotating at a speed greater than a predefined threshold, it includes using a high-speed strategy consisting of taking account of limitations of the inverter (2) to determine an intermediate set point torque that the machine can reach at the next sampling time with a given consumption of magnetic energy.

**10.** Regulation method according to Claim 9, **characterized in that** the high-speed strategy includes solving the following system of equations:

$$\left(I_{k,\tilde{d}} - I^0_{k,\tilde{d}}\right)^2 + \left(I_{k,\tilde{q}} - I^0_{k,\tilde{q}}\right)^2 = \left(a\left\|\vec{V}_{s\,max}\right\|\right)^2$$

$$I^2_{k,\tilde{d}} + I^2_{k,\tilde{q}} = \left\|\vec{I}_{s\,max}\right\|^2$$

in which $I_{k,\tilde{d}}$ and $I_{k,\tilde{q}}$ are the components of the stator current in the system of axes $(\tilde{d}, \tilde{q})$ at the time k, $I^0_{k,\tilde{d}}$

and $I^0_{k,\tilde{q}}$ are the components of the free evolution of the stator current in said system of axes at the same time, $\|\vec{V}_{smax}\|$ and $\|\vec{I}_{smax}\|$ are respectively the moduli of the maximum voltage and the maximum current in the stator, and "a" is a constant, the control voltage being obtained with the aid of the following equation

$$\begin{bmatrix} v_{\tilde{d}} \\ v_{\tilde{q}} \end{bmatrix}_{k-1} = \begin{bmatrix} \dfrac{I_{k,\tilde{d}} - I^0_{k,\tilde{d}}}{a} \\ \dfrac{I_{k,\tilde{q}} - I^0_{k,\tilde{q}}}{a} \end{bmatrix}.$$

**11.** Regulator for a rotating machine, including an inverter, a regulator receiving as input a set point electromagnetic torque and at least one sampled signal representing the electromagnetic torque of the machine and supplying to the inverter a control signal adapted to slave the electromagnetic torque of the machine to the set point torque by predicting, at each sampling time, the electromagnetic torque at the next sampling time and consecutively modifying the control voltage, which regulator is **characterized in that** it includes:

- a discrete control law for the machine, stored in memory, said control law giving the discrete control voltage ($\vec{V}_{sk-1}$) to be applied at each sampling time (k), which is determined in the form:

$$\vec{V}_{s,k-1} = \vec{f}(\Delta\Gamma_k, \Delta W_k)$$

in which f is a function giving the control voltage to be applied at sampling time k-1 to reach the set point torque and energy as a function of variables $\Delta\Gamma_k$ and $\Delta W_k$ respectively representing the difference between the electromagnetic torque of the machine to be reached ($\Gamma_k^*$) at the next sampling time k and the free evolution component ($\Gamma_k^0$) of said torque in the absence of control at said time and the difference between the magnetic energy ($W_k$) consumed by the machine at time k and the free evolution component ($W_k^0$) of said energy in the absence of control at said time, and
- means for determining at each sampling time, with the aid of the discrete control law, the control voltage ($\vec{V}_{s,k-1}$) to be applied to the machine so that the electromagnetic torque of the machine reaches the set point torque ($\Gamma^*$) and the magnetic energy consumed by the machine corresponds to a set point energy ($W^*$).

Fig. 1

Fig. 2

Fig. 3

Couple (Nm)

Fig. 4

Temps (s)

Couple (Nm)

Temps (s)

Fig. 5

Fig. 6

Fig. 7

Fig. 8

**EP 1 233 506 B1**

## RÉFÉRENCES CITÉES DANS LA DESCRIPTION

**Documents brevets cités dans la description**

- EP 1045514 A